# EUROPEAN PATENT APPLICATION

(11) **EP 2 506 208 A1**
(43) Date of publication of application: **03.10.2012**
(21) Application number: 11812507.9
(22) Date of filing: 27.07.2011
(51) Int. Cl.: G06Q 50/00, G06F 17/30, G06F 21/20

(54) **FORENSIC SYSTEM AND FORENSIC METHOD, AND FORENSIC PROGRAM**

(30) Priority: 28.07.2010 JP 2010169173
(71) Applicant: Ubic, Inc., Minato-ku, Tokyo 108-0075 (JP)
(72) Inventor: MORIMOTO Masahiro, Tokyo 108-0075 (JP); SHIRAI Yoshikatsu, Tokyo 108-0075 (JP); TAKEDA Hideki, Tokyo 108-0075 (JP); OHNO Masatoshi, Tokyo 108-0075 (JP)
(74) Representative: Klunker . Schmitt-Nilson . Hirsch
(86) International application number: PCT/JP2011/067055
(87) International publication number: WO 2012/014918

(57) **Abstract**

When digital document information related to translated is provided, a burden of an operation to creating litigant sources of evidence can be reduced.

Designation of at least one document file included in digital document information is accepted, designation of a language into which the designated document file is translated is accepted, the document file the designation of which is accepted is translated into the language the designation of which is accepted, a common document file representing the same content as that of the designated document file is extracted from digital document information recorded in a recording unit, translation-related information representing that the extracted common document file is translated by invoking a translated content of the translated document file is generated, and, on the basis of the translation-related information, a litigant document file is output.

## Description

### Technical Field

The present invention relates to a forensic system, a forensic method, and a forensic program and, more particularly, to a forensic system, a forensic method, and a forensic program to output litigant digital document information.

### Background Art

In the past, a means or a technique called forensics that collect and analyze devices, data, and electronic records required for cause unfolding or investigation when a crime or a legal conflict related to computer such as an illegal access or intelligent information leakage occur and disclose legal competence of evidence thereof is proposed.

In particular, in U.S. Civil Suit, eDiscovery (Electronic discovery) or the like is required. Since both a plaintiff and a defendant of the lawsuit have responsibility for providing all pieces of related digital information as evidence, they must provide digital information recorded in computers or a server as evidence.

On the other hand, with the rapid development and diffusion of IT, since most pieces of information in nowaday business world are created with computers, lots of digital information are in flood even within the same company. In particular, in a multinational company, lots of digital information described in a plurality of languages are in flood.

For this reason, although translation cost for pieces of digital document information that are not described in a standard language in a lawsuit is enormous, in a process of performing a preparing operation to provide evidential documents to a law court, even though the plurality of document files have the same contents described therein, the document files are independently translated to cause duplicated translation in vain.

In recent years, techniques related to a forensic system are proposed in Patent Document 1 and Patent Document 2. Patent document 1 discloses a forensic system that can efficiently identify a person who performs an illegal act by a method that can prove the conservation of competence of evidence and makes it hard to affect the reliability of the identification by a human element.

Patent Document 2 discloses a forensic system that is an information damage insurance that pays the insurance on damage caused by leaking of private information and includes forensics that includes an after-the-fact response, i.e., identification of a criminal person and a legal action as the contents of compensation for damage.

### Citation List

### Patent Literature

PTL 1: Japanese Patent Application Laid-Open No. 2006-178521
PTL 2: Japanese Patent Application Laid-Open No. 2007-148731

### Summary of Invention

### Technical Problem

However, for example, in a forensic system of Patent Literature 1 or Patent Literature 2, when litigant document files included in digital document information are to be collected, all the document files can be collected. As a result, vast amounts of information are collected, and document files in which the same contents are described are redundantly collected.

For this reason, a large amount of labor and tremendous amount of money are disadvantageously required to perform analysis and confirmation to search for only document files required for translation.

Thus, the present invention has been made in consideration of the circumstances, and has its object to provide a forensic system, a forensic method, and a forensic program that do not analyze all document files and output minimum document files to be translated.

### Solution to Problems

A forensic system according to the present invention that acquires digital information recorded in a plurality of computers or a server to analyze the acquired digital information includes: a digital information acquiring unit that acquires digital information including digital document information configured by a plurality of document files and user information related to a user who uses the plurality of computers or a server; a recording unit that records the digital information acquired by the digital information acquiring unit; a display unit that displays the recorded digital information and the user information; a designation accepting unit that accepts designation of at least one document file included in the digital document information and accepts designation of a specific language into which the document file the designation of which is accepted is translated; a translation processing unit that translates the document file the designation of which is accepted into the language the designation of which is accepted; a common document file extracting unit that extracts a common document file representing the same content as that of the designated document file from the digital document information recorded in the recording unit; a translation-related information generating unit that generates translation-related information representing that the extracted common document file is translated by invoking a translated content of the translated document file; and an output unit that outputs a litigant document file on the basis of the translation-related information. An output of the document file is any one of a paper output obtained by a printer, an output obtained by storing an electronic medium obtained by a digital document file creating device in a recording medium, and an output displayed on a display unit.

The "digital information acquiring unit" is to acquire digital information recorded in a plurality of computers or a server. As an acquiring method, for example, the digital information acquiring unit copies the digital information recorded in the computers or the server in a certain electronic medium to cause the forensic system to copy the digital information through the electronic medium, the computers or the server is connected to the forensic system through a network channel to copy digital information recorded in the computers or the server in the forensic system, or other methods are used so as to preserve the digital information.

The "translation-related information generating unit" is to generate information representing a translated document file in a plurality of document files. For example, the translation-related information may be recorded in incidental information of a document file the designation of which is accepted.

The "translation-related information" is data that makes the forensic system to determine whether a document file is a translated document file. More specifically, the translation-related information shows a specific document file and a specific language into which the specific document file is translated such that the computer can discriminate the specific document file and the specific language.

The "translation-related information generating unit" may record, for example, the translation-related information in incidental information of a common document file.

The "translation-related information generating unit" may record, for example, the translation-related information in the recording unit.

The "server" includes one or more server, and may be configured by, for example, a plurality of servers. For example, the "server" may be characterized by including any two or more of a mail server, a file server, and a document management server.

The "display unit" is a display or the like that can display digital information.

The "output unit" is to output digital document information as some production or some electronic data, and may be any one of a printer, a digital document file creating device, and a display unit.

In the forensic system according to the present invention, the translation-related information further includes information representing that a common document file has the same translated content as that in a translated document file and information representing an output priority order of document files in the output unit. The output unit may control permission of outputting each document file on the basis of the information representing the priority order.

The "information representing having the same translated content" is data to cause the forensic system to determine that the document files have the same contents. More specifically, by hash names, other numerical value numbers, signs, characters, and the like that are recorded in the control unit, the information represents that the document files have the same translated content.

The "information representing priority order" is information representing the output unit of the forensic system has a priority order in which a predetermined document file should be output. For example, the priority order may be represented by a numerical value number, a sign, a character, or the like.

The forensic system according to the present invention further includes a data format discriminating unit that discriminates a data format of a document file of digital document information recorded by the recording unit, the output unit may perform control such that, of the document files discriminated by the data format discriminating unit, when a translated document file has a data format different from that of a common document file, the common document file having the different data format is output. For example, the data format discriminating unit discriminates a data format of a document file of the recorded document information. More specifically, the data format discriminating unit discriminates data formats of a Word document, an Excel document, a PowerPoint document, a PDF document, or the like. For example, when a translated document file is a Word document, when a common document file having the same contents as those of the Word document is a PowerPoint document or the like, control is performed to also output the PowerPoint document because the Word document and the PowerPoint document have different data formats.

The forensic system according to the present invention further includes an incidental information setting unit that, through the display unit, sets incidental information representing whether document files of extracted digital document information are litigant. The output unit may output a litigant document file on the basis of the translation-related information and the incidental information.

The forensic system according to the present invention further includes a language determining unit that determines a specific language in which each of a plurality of document files is described on the basis of the recorded digital document information. The recording unit may record the plurality of document files such that the document files are classified into language-sorted folders, respectively, depending on the results of languages determined by the language determining unit.

A forensic method according to the present invention that acquires digital information recorded in a plurality of computers or a server to analyze the acquired digital information includes: acquiring digital information including digital document information configured by a plurality of document files and user information related to a user who uses the plurality of computers or a server; recording the digital information acquired by a digital information acquiring unit; displaying the recorded digital information and the user information; accepting designation of at least one document file included in the digital document information and accepting designation of a specific language into which the document file the designation of which is accepted is translated; translating the document file the designation of which is accepted into the language the designation of which is accepted; extracting a common document file representing the same content as that of the designated document file from the digital document information recorded in the recording unit; generating translation-related information representing that the extracted common document file is translated by invoking a translated content of the translated document file; and outputting a litigant document file on the basis of the translation-related information. An output of the document file is any one of a paper output obtained by a printer, an output obtained by storing an electronic medium obtained by a digital document file creating device in a recording medium, and an output displayed on a display unit.

A forensic program according to the present invention that acquires digital information recorded in a plurality of computers or a server to analyze the acquired digital information causes a computer to realize: a function of acquiring digital information including digital document information configured by a plurality of document files and user information related to a user who uses the plurality of computers or a server; a function of recording the digital information acquired by a digital information acquiring unit; a function of displaying the recorded digital information and the user information; a function of accepting designation of at least one document file included in the digital document information and accepting designation of a specific language into which the document file the designation of which is accepted is translated; a function of translating the document file the designation of which is accepted into the language the designation of which is accepted; a function of extracting a common document file representing the same content as that of the designated document file from the digital document information recorded in the recording unit; a function of generating translation-related information representing that the extracted common document file is translated by invoking a translated content of the translated document file; and a function of outputting a litigant document file on the basis of the translation-related information. An output of the document file is any one of a paper output obtained by a printer, an output obtained by storing an electronic medium obtained by a digital document file creating device in a recording medium, and an output displayed on a display unit.

The summary of the invention described above does not cite all necessary characteristics of the present invention. Sub-combinations of the characteristic groups can be inventions.

### Advantageous Effects of Invention

According to the forensic system, the forensic method, the forensic program of the present invention, designation of at least one document file included in the digital document information is accepted, designation of a specific language into which the document file the designation of which is accepted is translated is accepted; the document file the designation of which is accepted into the language the designation of which is accepted is translated; a common document file representing the same content as that of the designated document file from the digital document information recorded in the recording unit is extracted; translation-related information representing that the extracted common document file is translated by invoking a translated content of the translated document file is generated; and a litigant document file is output on the basis of the translation-related information to make it possible to output a document file minimally required to be translated without analyzing all document files.

### Brief Description of Drawings

FIG. 1 is a block diagram showing a configuration of a forensic system according to a first embodiment of the present invention.

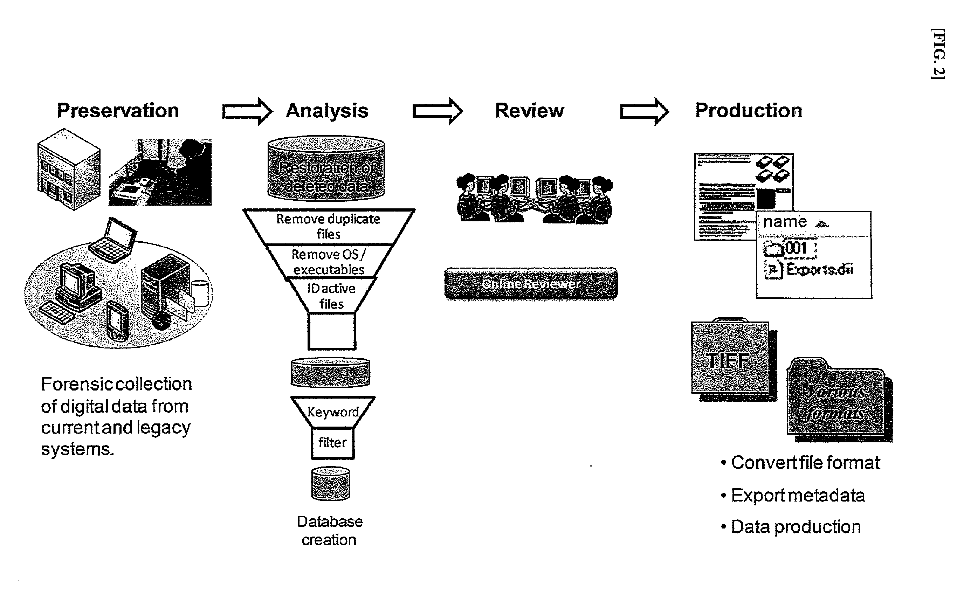

FIG. 2 is a diagram showing a flow of a forensic system service according to the present invention.

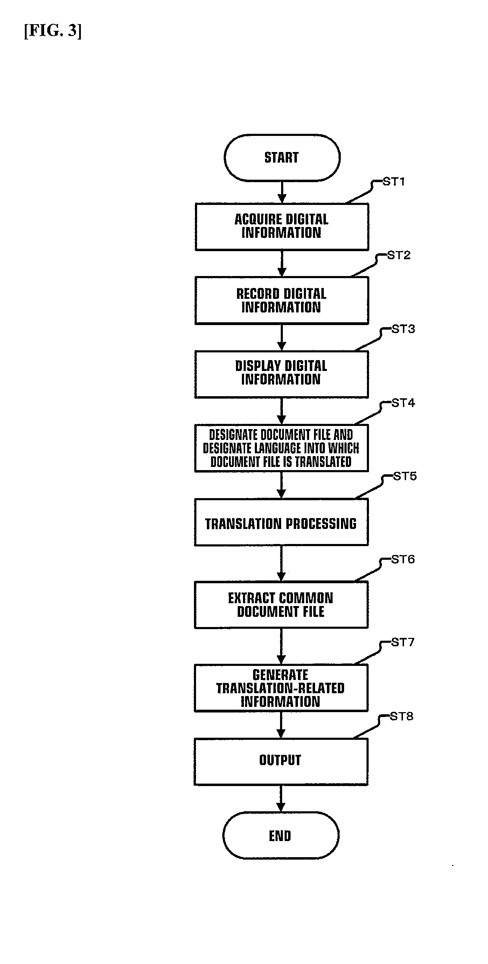

FIG. 3 is a flow chart showing a process flow of the forensic system according to the present invention.
FIG. 4 is a diagram showing translation-related information of the forensic system according to the present invention.
FIG. 5 is a screen (part 1) displayed on a display unit of the forensic system according to the present invention.
FIG. 6 is a screen (part 2) displayed on a display unit of the forensic system according to the present invention.
FIG. 7 is a functional block diagram showing a configuration of a forensic system according to a second embodiment of the present invention.

### Description of Embodiments

Embodiments of the present invention will be described below with reference to the accompanying drawings.

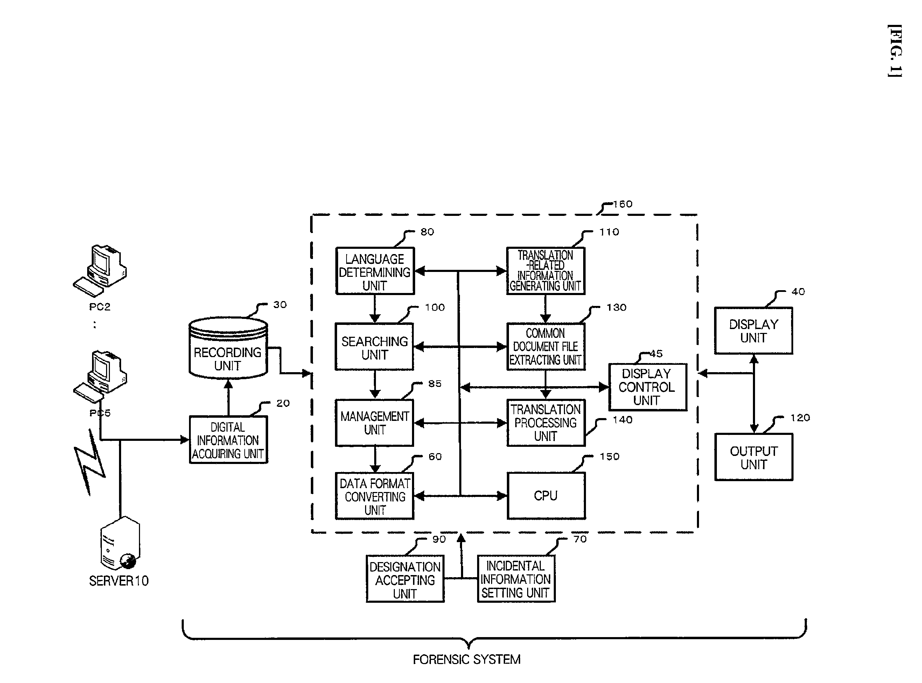

FIG. 1 is a functional block diagram showing a configuration of a forensic system 1 according to an embodiment of the present invention.

The forensic system 1 shown in FIG. 1 that acquires a plurality of computers (PC2 to 5) or a server 10 to analyze the acquired digital information includes: a digital information acquiring unit 20 that acquires digital information including digital document information configured by a plurality of document files and user information related to a user who uses the plurality of computers or a server; a recording unit 30 that records the digital information acquired by the digital information acquiring unit 20; a display unit 40 that displays the recorded digital information and the user information; a designation accepting unit 90 that accepts designation of at least one document file included in the digital document information and accepts designation of a specific language into which the document file the designation of which is accepted is translated; a translation processing unit 140 that translates the document file the designation of which is accepted into the language the designation of which is accepted; a common document file extracting unit 130 that extracts a common document file representing the same content as that of the designated document file from the digital document information recorded in the recording unit 30; a translation-related information generating unit 110 that generates translation-related information representing that the extracted common document file is translated by invoking a translated content of the translated document file; and an output unit 120 that outputs a litigant document file on the basis of the translation-related information.

A control unit 160 includes a display control unit 45, a data format converting unit 60, a language determining unit 80, a management unit 85, a searching unit 100, a translation-related information generating unit 110, a common document file extracting unit 130, a translation processing unit 140, and a CPU 150.

The forensic system 1 includes a data input device such as a touch panel when a keyboard, a mouse, or the display unit 40 has a touch panel function. As the data input device, an incidental information setting unit 70 and the designation accepting unit 90 are given.

The designation accepting unit 90 and the incidental information setting unit 70 may be different input devices or the same data input devices.

The output unit 120 is a recording device or a printer that records data on an electronic medium.

The configuration of the forensic system 1 as shown in FIG. 1 is realized by calculating and executing a forensic program loaded on an auxiliary memory device (not shown) by the CPU 150 on a computer. At this time, the forensic program is stored in a recording medium such as a CD-ROM or distributed through a network such as the Internet and installed in the computer.

In the first embodiment of the present invention, the forensic system 1 is explained as a personal computer. However, the forensic system 1 may be a mobile-terminal-type computer or the like, or a network-type system configuration (as will be described in a second embodiment).

The digital information acquiring unit 20 is to acquire digital information recorded in the PC2 to 5 or the server 10 that is used by a user.

For example, the digital information acquiring unit 20 copies the digital information recorded in the PC2 to 5 or the server 10 to a certain electronic medium (for example, a USB, a CD, a DVD, or the like) and cause the forensic system to copy the digital information through the electronic medium.

When the PC2 to 5 or the server 10 is connected to the forensic system 1 through a network channel, the digital information acquiring unit 20 accepts data transmission of the digital information recorded in the PC2 to 5 or the server 10 through the network to preserve the digital information.

The translation-related information is data that makes the forensic system possible to determine whether a document file is a translated document file. More specifically, the translation-related information shows a specific document file and a specific language into which the specific document file is translated such that the computer can determine the specific document file and the specific language.

The translation-related information generating unit 110 generates information representing a translated document file in a plurality of document files. For example, the translation-related information may be recorded in incidental information of the document file the designation of which is accepted by the designation accepting unit 90.

The translation-related information generating unit 110 may record the translation-related information in incidental information of the common document file.

The translation-related information generating unit 110 may record the translation-related information in the recording unit 30.

The digital information acquiring unit 20 may acquire second digital information including second digital document information and second user information and recorded in a server (called a second server) different from the server 10.

In this case, the forensic system 1 may use not only the digital information in the server 10 but also the second digital document information recorded in the second server.

In the forensic system 1, for example, the translation-related information further includes information representing that the common document file has the same translated content as that of the translated document file and information representing an output priority order of document files in the output unit 120, and the output unit 120 controls permission of an output of each document file on the basis of the information representing the priority order.

The information representing that the document files have the same translated content is data that makes the forensic system 1 to determine that the document files have the same contents. More specifically, it may be shown by a hash name, another numerical value number, a character, or the like recorded in the control unit that the document files have the same contents.

The information representing the priority order is information representing that the recording unit 30 of the forensic system 1 has a priority order in which a predetermined document file should be output. For example, the priority order may be represented by a numerical value number, a sign, a character, or the like.

The forensic system 1 further includes the data format converting unit 60 that determines a data format of a document file of digital document information recorded by the recording unit 30. The output unit 120 perform control such that, of the document files discriminated by the data format discriminating unit 60, when a translated document file has a data format different from that of a common document file, the common document file having the different data format is output.

The display unit 40 displays display contents by the designation of the display control unit 45 configured in the control unit 160.

When the digital information acquiring unit 20 acquires digital information in the nth place (n = 2, 3,...), the digital information acquiring unit 20 may acquire only digital document information and folder information formed in the PC2 to 5 or the server 10 on the information representing time of day measured by the control unit 160 after the digital information is acquired in the (n - 1)th place.

The server 10 is one or more server, for example, may be configured by a plurality of servers, and may be any two or more of at least a mail server, a file server, and a document management server.

The forensic system 1 may be able to be simultaneously used by a plurality of operators.

The incidental information may be set through the plurality of incidental information setting units 70 while a plurality of operators simultaneously confirm digital document information.

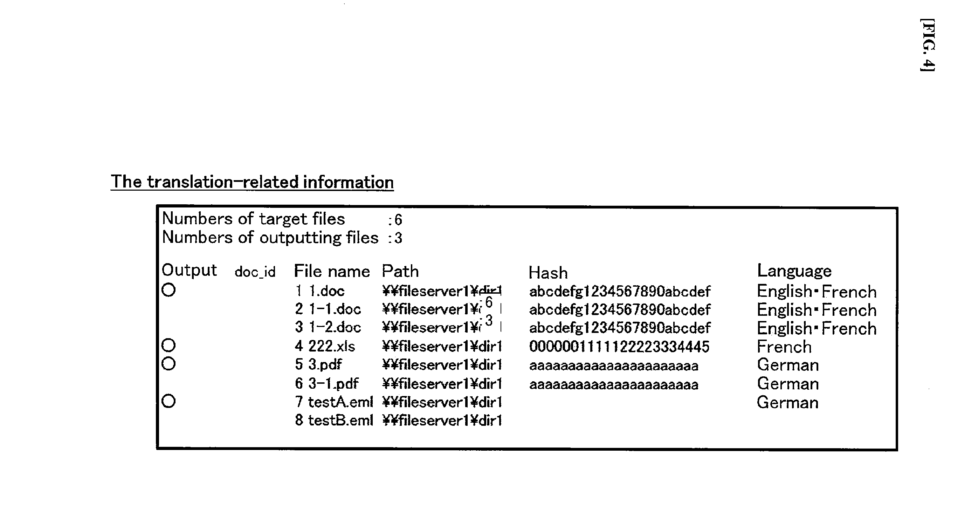

More specifically, an operator a specific language in which each document file records a language in which each document file is described as incidental information (for example, language tag information). The language determining unit 80 determines a language in which each document file is described, and may record information representing the languages in which the document files are described as incidental information (for example, language Tag information) in units of document files, or may record the information as the translation-related information as shown in FIG. 4.

The language determining unit 80, for example, generates a plurality of partial character string from character strings of a predetermined language according to a predetermined rule, searches for a character string of a document file stored in the recording unit 30, finds out a character string matched with the generated partial character string, and evaluates a language to which each partial character string may belong and the possibility of each of the partial character strings belonging to the language, thereby determining a language to which a character string of a predetermined document file belongs.

The output unit 120 is to output digital document information as some production, and may be, for example, a printer or a recording device that records digital information on a electronic medium. The output unit 120 may be the display unit 40 or may be to display and output the digital document information.

The translation processing unit 140 is a database in which translation resources classified into a plurality of classification items in units of fields are registered. Direction words, translated words, word classes, meanings, and the like are registered as the translation resources. In the translation processing unit 140, classification items have hierarchical form such that, for example, a route, a higher level, an intermediate level, and a lower level correspond to a large item, an intermediate item, and a small item, respectively. The translation processing unit 140 selects a translation resource related to a classification item associated with digital document information, and, on the base of the selected translation resource, translates an original document, operation information, and the like in the input data into at least another language.

A procedure of performing a preparing operation to provide sources of evidence to court by the forensic system 1 will be briefly described below.

Forensics, i.e., when a crime or a legal conflict related to computer such as an illegal access or intelligent information leakage occur, devices, data, electronic records required for cause unfolding or investigation must be collected and analyzed, and legal competence of evidence thereof must be disclosed.

In particular, in U.S. Civil Suit, eDiscovery (Electronic discovery) or the like is required. Since both a plaintiff and a defendant of the lawsuit have responsibility for providing all pieces of related digital information as evidence, they must provide digital information recorded in computers or a server as evidence.

Thus, the forensic system 1 sorts litigant digital information and preserves the digital information recorded in the PC2 to 5 or the server 10 to perform a preparing operation for providing sources of evidence to court.

Thereafter, the forensic system 1 registers the preserved digital information in a database such as the recording unit 30, analyzes (Analysis) the digital information, and segmentalizes the digital information by keyword searching or filtering.

The recording unit 30 may be included in the computer of the forensic system 1 or may be stored in a server as a member being independent from the computer.

The forensic system 1 reviews (Review) the segmentalized digital information on the display unit 40, and an operator sets incidental information to the digital document information through the incidental information setting unit 70.

The control unit 160 has a preserving/analyzing/searching function, a process analyzing/searching function, a Review function, and a Production function.

For example, the preserving/analyzing/searching function of the control unit 160 has a Case management function (functions of the management unit 85), a file analyzing function (function of the searching unit 100) that can analyze types of files and the number of held files in units of object persons/evidential matters to make it possible to analyze a file to be searched for, a file type selecting/extracting function (function of the control unit 160) that makes it possible to select a file type to be searched for/browsed, and a preserving function (control unit 160) that makes it possible to preserve a selected file as another file. The process analyzing/searching function of the control unit 160 has a full-text searching function and a frequently appearing top extracting function (function of the searching unit 100).

The full-text searching function copes with a large number of languages, makes it possible to perform AND OR NOT searching by a Boolean operation, makes it possible to perform searching using brackets by a Grouping operation, and has a highlight function for a searched word and a function of making Meta Data. The full-text searching function has a high-level searching function to make it possible to perform proximity searching, regular expression searching, and the like. The frequently appearing top extracting function extracts a frequently appearing word in certain digital document information.

The Review function of the control unit 160 includes: an E-mail Family browsing process function (function of the searching unit 100) that can browse, for example, an E-mail Family at once; a free design Tag function (function of the searching unit 100) that can search for information in which one evaluation or a plurality of evaluations are set as incidental information on the basis of the evaluations; a free design BookMark function (function of the searching unit 100) that makes it possible to perform BookMark searching of information in which a hierarchical structure BookMark is set; a free input comment column (function of the management unit 85) in which a comment column in which an arbitrary number of characters can be input is set; a simultaneously browsing function used to cause the plurality of operators to confirm digital document information; an access right control function (function of the management unit 85) that makes it possible to set an access right, an administrative right, a browsing-only right, and the like for each account of a browsing person when Review is performed; an in-document writing Memo function (function of the management unit 85) that makes it possible to perform writing in a document without changing the text of digital document information; a Case Management function (function of the management unit 85) that makes it possible to display the number of Review-completed documents (%); an E-mail threading function (function of the management unit 85) that displays E-mail threads (returning, transferring, and the like) at once; a mail analyzing display function (function of the common document file extracting unit 130) that graphically displays a mail exchange; a similar document display function (function of the management unit 85) that automatically classifies and displays similar documents such as a Draft and an old Version; a similar document difference highlight function (function of the management unit 85) that highlight-displays only a different portion of similar documents; and a search-Hit portion before/after sentence display function (function of the searching unit 100) that displays only a peripheral portion of a search-Hit word.

The Production function of the control unit 160 has a various-output function (function that can output data from the output unit 120 by a designation from the management unit 85) of an XML output such as a real file, meta-information, or Tag information, a CSV output, an image output, and various load file outputs and a Batch Printing function (function that can output data from the output unit 120 by a designation from the management unit 85).

Finally, the forensic system 1 perform production (Production) to cause the output unit 120 to generate data for an electronic medium. For example, by a recording device that records data in an electronic medium, the data is recorded in the recording medium in a predetermined data format.

Procedures of performing a preparing operation to provide sources of evidence to court in the forensic system 1 will be described below in detail.

The digital information acquiring unit 20 acquires digital information including digital document information configured by a document file formed by a general-purpose format such as a Word format, a PDF format, a PPT format, or an Excel format and user information related to a user who uses the PC2 to 5 or the server 10 (ST1).

As the digital information, access history information may be included. The access history information, as shown in FIG. 1, shows that the user who uses the PC2 to 5 accesses digital document information recorded in the server 10 through a network. For example, the access history information shows a user ID representing who is the user, a period of time in which the user accesses specific digital information, and the digital document information.

The PC2 to 5 are described as 4 PCs, for example. However, the number of PCs is not limited to 4, and two or more PCs may be used.

The digital information acquiring unit 20 records the acquired digital information in the recording unit 30 (ST2).

The display unit 40 displays the digital information (digital document information and user information, in addition, access history information, user information, a title of digital information, and the like) (ST3).

For example, the display unit 40 may all the user information, the digital document information, and the access history information in response to a designation from the display control unit 45, may display at least one of the pieces of information, and may display at least one of pieces of attribute information of the pieces of information (for example, a name of user, a file name of document file, a person who accesses the information, a period of time, a document file, and the like).

Other functions obtained through the display unit 40 of the forensic system 1 will be described below. For example, an operator logs into the forensic system 1 while confirming a screen of the display unit 40, and, furthermore, creates a Case (unit of an uppermost data group of the database in the forensic system 1). The operator sets and manages destinations of servers or the like corresponding to recording units 30 (in this case, the two or more recording units 30 are present) in which digital information is recorded while confirming the screen of the display unit 40. The operator sets and manages a Custodian (data holding object person) while confirming the screen of the display unit 40. The operator performs creation and state management of a Target (middle-level group unit of the database of the forensic system 1) configured by collected and preserved digital document information while confirming the screen of the display unit 40. The operator associates the collected and preserved Target with the Custodian.

For example, the operator may sets a specific Custodian related to a lawsuit in advance for a plurality of Targets configured by digital document information acquired from the PC2 to 5 or the server while confirming the display unit 40.

Finally, the operator one or more Targets to be analyzed while confirming the screen of the display unit 40.

In this manner, the control unit 160 acquires the digital information recorded in the recording unit 30 and can analyze the digital information by using various functional units.

The forensic system 1 includes the control unit 160 that creates statistical data expressed by a data capacity of each data format of the digital document information recorded in the recording unit 30 or statistical data expressed by a data capacity of each data format of the data searched by the searching unit 100.

For example, the operator selects a Custodian to be analyzed and a predetermined Path (directory) from a Target associated with the Custodian while confirming the screen of the display unit 40 to make it possible to display a lost of analysis results of the numbers of files and capacitors of the Custodians. The operator can display a list of analysis results of the numbers of files and capacities of the Paths while confirming the screen of the display unit 40. The operator can display a list of analysis results of the numbers of files and capacities of File Types as a chart while confirming the screen of the display unit 40. The operator can display a list of analysis result of the number of files and capacities of File Types while confirming the screen of the display unit 40.

The operator can display a list of analysis results of the numbers of files and capacities of File Types as a chart while confirming the screen of the display unit 40. Furthermore, the operator can display a list of analysis results of the numbers of files and capacities of File Types of only files that can be text-searched while confirming the screen of the display unit 40. The files that can be text-searched are searched in advance by the control unit 160 to text information that can be extracted from the digital document information recorded in the recording unit 30.

Returning to the explanation of the flow chart shown in FIG. 4, the designation accepting unit 90 accepts a designation of at least one document file included in the digital document information and accepts a designation of a specific language into which the designated document file is translated (ST4).

The operator selects a document file desired to be translated and specific terms into which the document file is desired to be translated while confirming the screen of the display unit 40.

The translation processing unit 140 automatically translate the document file the designation of which is accepted by the designation accepting unit 90 into the language the designation of which is accepted by the designation accepting unit 90 (ST5). A translator may translate the document file the designation of which is accepted by the designation accepting unit 90 into the language the designation of which is accepted by the designation accepting unit 90.

The common document file extracting unit 130 extracts a common document file representing the same content as that of the document file designated by the designation accepting unit 90 from the digital document information recorded in the recording unit 30 (ST6).

The common document file extracting unit 130 can extract a common document file by using a hash table of the document files recorded in the recording unit 30. More specifically, the common document file extracting unit 130 records an ID name, a file name, a path name, and a hash name of a document file and a language name representing a language content of the document file in association with each other. When document files have the same hash name, the common document file extracting unit 130 can extracts the document files having the same hash name except for a document file the designation of which is accepted as a common document file.

The common document file extracting unit 130 includes an algorithm that discriminates the identity of the contents of the text data of the document files. According to the algorithm, the common document file that is the same document file as the document file the designation of which is accepted may be extracted.

The translation-related information generating unit 110 generates translation-related information representing the extracted common document file is translated by invoking the translated content of the translated document file by using the common document file extracting unit 130 (ST7). The translation-related information generating unit 110 is to generate translation-related information such that an operator sets the translation-related information through the designation accepting unit 90.

The output unit 120 outputs a litigant document file on the basis of the translation-related information (ST7). The translation-related information includes information representing that a common document file has the same translated content as that of the document file designated by the designation accepting unit 90 and information representing an output priority order of the document file in the output unit 120. The output unit 120 controls permission of an output of a document file on the basis of the information representing the priority order.

More specifically, information represents that document files having the same hash name shown in FIG. 4 have the same translated content, and is information representing an output priority order such that a document file having a smaller ID number is preferentially output.

The forensic system 1 includes the data format converting unit 60 that discriminates a data format of a document file of digital document information recorded by the output unit 120. When, of the document files discriminated by the data format converting unit 60, a designated document file has a data format different from that of the common document file, the output unit 120 performs control such that a common document file having a different data format is output. More specifically, when the document files have the same hash name and different data formats, the output unit 120 performs control to output the common document file. For example, the data format converting unit 60 discriminate a data format of the document file of the recorded document information, more specifically, a data format such as a Word document, an Excel document, a PowerPoint document, and a PDF document. For example, when the translated document file is a Word document, when a common document representing the same contents as those of the word document is a PowerPoint document, the word document and the PowerPoint document have different data formats. For this reason, control is performed to also output the PowerPoint document.

Since the access right of a person is widely set when the status of the person is high in an organization in many cases when a digital document information the access right of which is set to a Custodian is reviewed (confirmed), in fact, the control unit 160 consequently collects volumes of documentation that is not actually browsed by the person and that is not related to litigation. It is required to a large amount of labor and money to perform analysis to find out only the documents related to the person.

Thus, the control unit 160 may extract only digital document information which a specific person accesses on the basis of an access history information related to a designated specific person (Custodian).

For example, when an operator designates First Party who is a Custodian, only a document file which First Party accesses is extracted. By using the access history information, a document file which First Party actually accesses (for example, browses, edits, or creates) can be extracted. The access history information shows that a user who uses one of a plurality of computers accesses digital document information recorded in a server. For example, the access history information includes a user ID representing who is the user and access information representing digital document information which the user accesses and a period of time in which the person accesses the digital document information. When ID information used when First Party uses a computer or a server and access history information are recorded in the recording unit 30 to make it possible to extract a document file which First Party accesses by associating the ID of First Party with the document file.

Although First Party is exemplified in the above description, when, in addition to First Party, a plurality of Custodians such as Second Party are designated, the data format converting unit 60 can extract a document file related to the plurality of Custodians.

As described above, when the operator sets a relationship between a Target and a custodian, consistently, as the Custodian in unit of Target, the operator determines that the Target and the Custodian are related to each other and extracts only a document file which the Custodian actually designated by the designation accepting unit 90 in the selected Target accesses.

Furthermore, the operator can perform searching by using the function of the searching unit 100 while confirming the screen of the display unit 40. The operator can perform simple browsing while conforming the screen of the display unit 40. The operator can recognize the contents of the digital document information by the simple browsing.

In use of the forensic system 1, a tag "Hot" (incidental information) is given to litigant information in units of files, a tag "Responsive" (incidental information) is given to information that may be related to litigation in units of files, and a tag "Not Responsive" (incidental information) is given to information that never be related to litigation. More specifically, a file line of a Batch list is clicked to make it possible to input a tag.

The operator designates the CPU 150 to output a litigant document file from the output unit 120 on the basis of the incidental information. The CPU 150 that accepts a designation from the operator controls the output unit 120 to output the document file. For example, only a document file to which Hot is given may be output, and a document file to which Hot and Responsive is given may be output.

The forensic system 1 includes the incidental information setting unit 70 that sets incidental information representing whether each of document files of the extracted digital document information is litigant. The output unit 120 may output a litigant document file on the basis of the translation-related information and the incidental information.

More specifically, the output unit 120 outputs only a document file (having the same hash name and the highest priority order) that is designated by the designation accepting unit 90 and to which Hot is given. Alternatively, the output unit 120 may output a document file (the same hash name and the highest priority order) that is designated by the designation accepting unit 90 and to which Hot and Responsive are given.

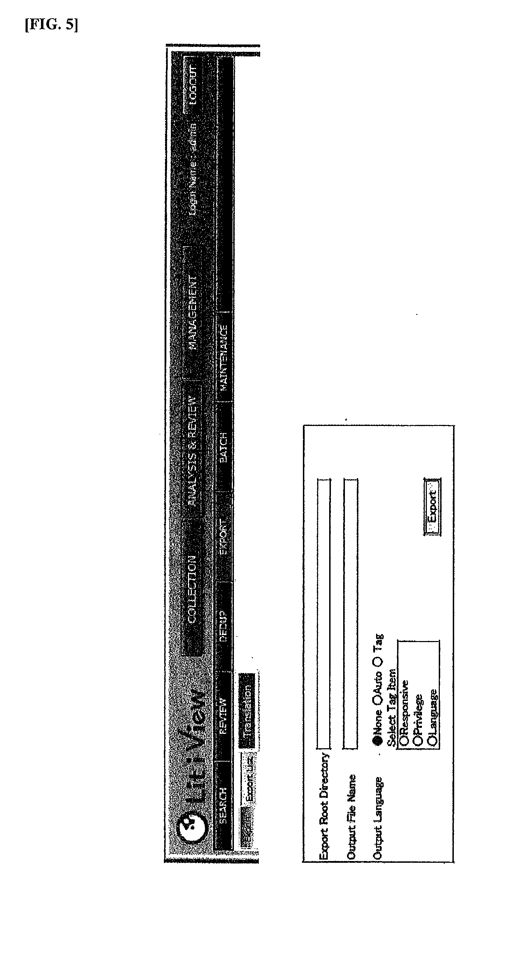

FIG. 5 is a screen displayed on the display unit 40. More specifically, when the control unit 160 selects Auto in Output Language, the control unit 160 creates directories of determination results of the language determining unit 80 in units of meta-information and outputs a target document file under the control of the directories. On the other hand, when Tag is selected in Output Language, directories are created in units of tags, and a target document file under the control of the directories is output. When one document file includes a plurality of languages, the same document files are arranged in language holders, respectively. A document to which no tag is attached is not a target for an output.

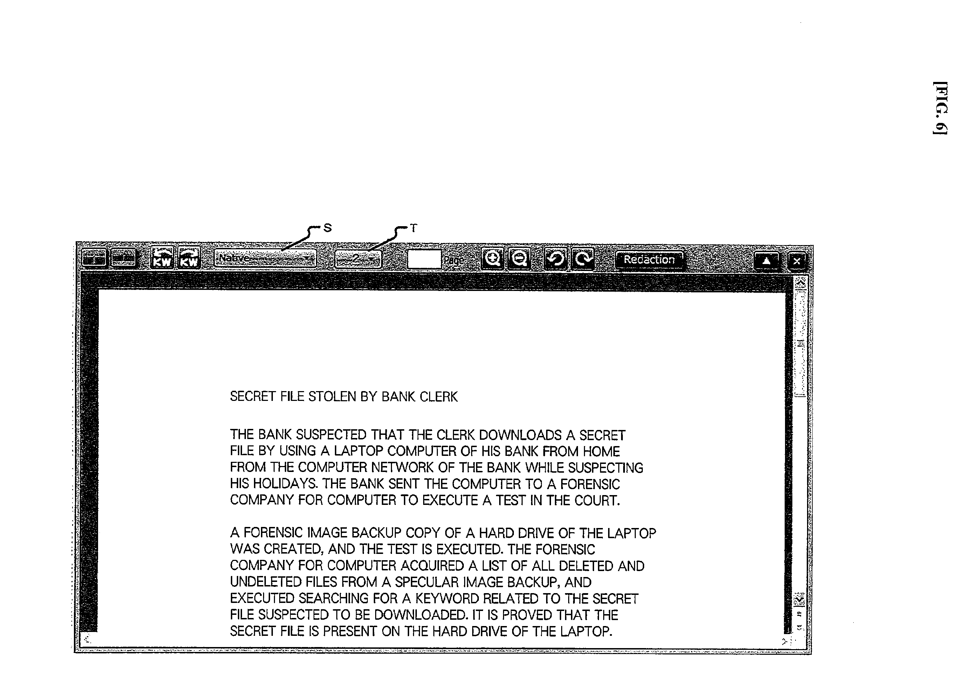

FIG. 6 is a screen displayed on the display unit 40. When the document file includes a translated document file, a sign T is clicked to make it possible to switchably display document files expressed in the languages. When there are a plurality of document files having the same data format, a sign S is clicked to make it possible to switchably display a document file of a designated ID number.

The forensic system 1 is configured by a plurality of forensic-system servers, and a digital information extracting unit and a searching unit may be separated from each other in the forensic-system servers. Furthermore, the separated forensic systems may be connected to each other through a network.

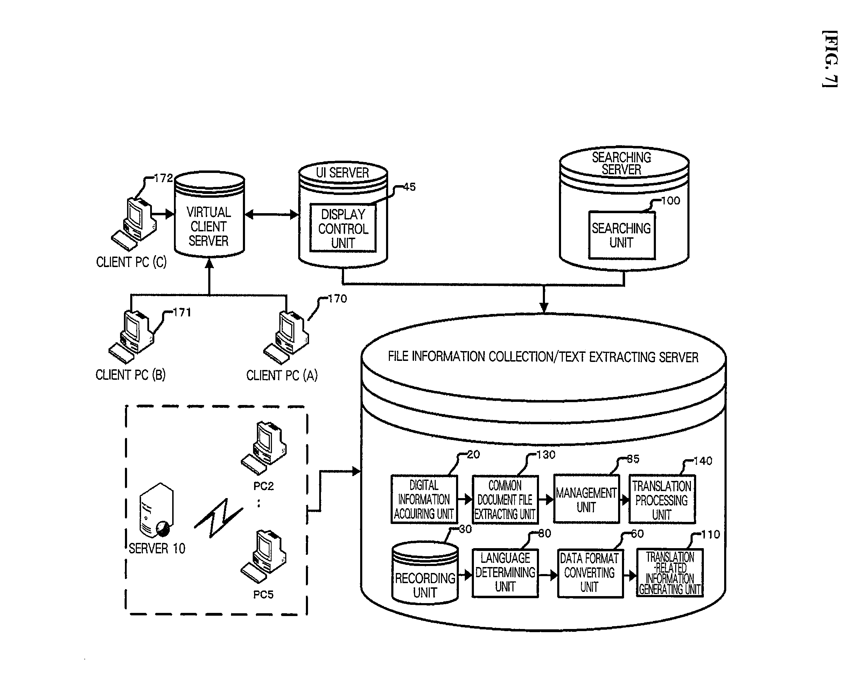

A second embodiment will be described below with reference to FIG. 7.

The forensic system 1, as shown in FIG. 7, may have a network-type system configuration. The forensic system 1 according to the second embodiment has the same processing units as those of the forensic system 1 described in the embodiment. However, the processing units are dispersed and arranged in a plurality of servers. The servers are connected to each other through a network. For this reason, servers may be domestically dispersed and arranged, or the servers may be internationally dispersed and arranged.

The display units 40 are arranged in client PCs 170 to 172, respectively. Data exchanges are integrated with each other in a virtual client server between the plurality of client PCs and a UI server to make it possible to improve display response.

In this manner, the forensic system 1 may be configured by a computer as descirbed in the first embodiment, or the forensic system may be configured by a network-type system as described in the second embodiment.

According to the forensic system 1, the incidental information setting unit 70 and the designation accepting unit 90 correspond to data input devices included in the client PCs 170 to 172, respectively.

According to the forensic system 1, designation of at least one document file included in digital document information is accepted, designation of a language into which the designated document file is translated, the document file the designation of which is accepted is translated into the language the designation of which is accepted, a common document file representing the same content as that of the designated document file is extracted from digital document information recorded in a recording unit, translation-related information representing that the extracted common document file is translated by invoking the translated content is generated, and on the basis of the translation-related information, a litigant document file is output to make it possible to output minimum translated document files without outputting all translated document files. In this manner, redundant translation of pieces of digital document information having the same contents can be reduced.
The forensic system 1 includes the language determining unit 80 and the searching unit 100. When the incidental information setting unit 70 sets incidental information to searched document files, of digital document information recorded in a server, a parent population of only digital document information which a specific person accesses and that may be litigant can be narrowed down by predetermined searching.

According to the forensic system 1, when the document files converted by the control unit 160 are processed without changing the converted data format until the document files are output by the output unit 120, a useless data format converting step in the middle of the processing flow can be reduced, and the risk of deterioration in quality of the digital document information can be excluded.

According to the forensic system 1, furthermore, when the control unit 160 is arranged, statistical data can be visualized and provided to an operator. For this reason, labor for pretrial can be early recognized.

According to the forensic system 1, furthermore, the digital information acquiring unit 20 acquires only digital document information and holder information that are created after time of day previously measured by the control unit 160. When only the acquired digital document information, user information related to the folder information, and access history information are acquired, differential collection of the digital information is made possible, and a burden of redundantly acquiring the same digital information from a sever or the like each time can be reduced.

According to the forensic system 1, when the control unit 160 and the searching unit 100 are separately arranged in the forensic-system servers, respectively, calculating steps of the processing units are dispersed by the servers to make it possible to improve the processing ability of the entire system.

According to the forensic system 1, when a plurality of operators can simultaneously use the system, since incidental information can be set by different operators, the incidental information setting unit 70 can early perform a preparing operation by determining whether the information is sources of evidence to court by a plurality of persons.

The above description is performed by using the embodiments of the present invention. However, the technical scope of the present invention is not limited to the scope described in the embodiments. It is apparent that the embodiments can be variedly changed or improved. It is apparent from the description of the scope of claims that the changed or improved embodiment can be included in the technical scope of the present invention.

The entire systems or the processing units of the forensic systems 1 according to the first embodiment and the second embodiment can be combined to each other.

### Reference Signs List

- 1: Forensic system
- 2 to 5: PC
- 10: Server
- 20: Digital information acquiring unit
- 30: Recording unit
- 40: Display unit
- 45: Display control unit
- 60: Data format converting unit
- 70: Incidental information setting unit
- 80: Language determining unit
- 90: Designation accepting unit
- 100: Searching unit
- 110: Translation-related information generating unit
- 120: Output unit
- 130: Common document file extracting unit
- 140: Translation processing unit
- 150: CPU
- 160: Control unit
- 170 to 172: Client PC

## Claims

1. A forensic system that acquires digital information recorded in a plurality of computers or a server to analyze the acquired digital information comprising:
a digital information acquiring unit that acquires digital information including digital document information configured by a plurality of document files and user information related to a user who uses the plurality of computers or a server;
a recording unit that records the digital information acquired by the digital information acquiring unit;
a display unit that displays the recorded digital information and the user information;
a designation accepting unit that accepts designation of at least one document file included in the digital document information and accepts designation of a specific language into which the document file the designation of which is accepted is translated;
a translation processing unit that translates the document file the designation of which is accepted into the language the designation of which is accepted;
a common document file extracting unit that extracts a common document file representing the same content as that of the designated document file from the digital document information recorded in the recording unit;
a translation-related information generating unit that generates translation-related information representing that the extracted common document file is translated by invoking a translated content of the translated document file; and
an output unit that outputs a litigant document file on the basis of the translation-related information.

2. The forensic system according to claim 1, wherein the translation-related information generating unit further records the translation-related information in incidental information of the document file the designation of which is accepted.

3. The forensic system according to claim 1, wherein the translation-related information generating unit records the translation-related information in incidental information of the common document file.

4. The forensic system according to claim 1, wherein the translation-related information generating unit records the translation-related information in the recording unit.

5. The forensic system according to any one of claims 1 to 4, wherein the translation-related information further includes information representing that the common document file has the same translated content as that of the designated document file and information representing an output priority order of the document file in the output unit, and
the output unit controls permission of outputting the document file on the basis of the information representing the priority order.

6. The forensic system according to claim 5, further comprising
a data format discriminating unit that discriminates a data format of a document file of digital document information recorded by the recording unit, wherein
the output unit performs control such that, of the document files discriminated by the data format discriminating unit, when a translated document file has a data format different from that of a common document file, the common document file having the different data format is output.

7. The forensic system according to any one of claims 1 to 6, wherein the output unit is any one of a printer, a digital document file creating device, and the display unit.

8. The forensic system according to any one of claims 1 to 7, further comprising an incidental information setting unit that sets incidental information representing whether document files of the extracted digital document information are litigant, wherein
the output unit outputs a litigant document file on the basis of the translation-related information and the incidental information.

9. The forensic system according to any one of claims 1 to 8, further comprising
a language determining unit that determines a specific language in which each of the plurality of document files is described on the basis of the recorded digital document information, wherein
the recording unit records the plurality of document files such that the plurality of document files are classified and recorded in language-sorted folders, respectively, depending on the results of languages determined by the language determining unit.

10. A forensic method that acquires digital information recorded on a plurality of computers or a server to analyze the acquired digital information comprising:
acquiring digital information including digital document information configured by a plurality of document files and user information related to a user who uses the plurality of computers or a server;
recording the digital information acquired by a digital information acquiring unit;
displaying the recorded digital information and the user information;
accepting designation of at least one document file included in the digital document information and accepting designation of a specific language into which the document file the designation of which is accepted is translated;
translating the document file the designation of which is accepted into the language the designation of which is accepted;
extracting a common document file representing the same contents as that of the designated document file from the digital document information recorded in the recording unit;
generating translation-related information representing that the extracted common document file is translated by invoking a translated content of the translated document file; and
outputting a litigant document file on the basis of the translation-related information.

11. A forensic computer program product that acquires digital information recorded on a plurality of computers or a server to analyze the acquired digital information to cause a computer to realize:
a function of acquiring digital document information configured by a plurality of document files and user information related to a user who uses the plurality of computers or a server;
a function of recording the digital information acquired by a digital information acquiring unit; a function of displaying the recorded digital information and the user information;
a function of accepting designation of at least one document file included in the digital document information and accepting designation of a specific language into which the document file the designation of which is accepted is translated;
a function of translating the document file the designation of which is accepted into the language the designation of which is accepted;
a function of extracting a common document file representing the same contents as that of the designated document file from the digital document information recorded in the recording unit; a function of generating translation-related information representing that the extracted common document file is translated by invoking a translated content of the translated document file; and
a function of outputting a litigant document file on the basis of the translation-related information.
